## Europäisches Patentamt
## European Patent Office
## Office européen des brevets

(11) Publication number: **0 160 798**
**B1**

(12) **EUROPEAN PATENT SPECIFICATION**

(45) Date of publication of patent specification: **28.06.89**
(51) Int. Cl.⁴: **B 23 C 5/20**

(21) Application number: **85102163.4**

(22) Date of filing: **27.02.85**

(54) Milling method.

(30) Priority: **30.03.84 US 595375**

(43) Date of publication of application:
**13.11.85 Bulletin 85/46**

(45) Publication of the grant of the patent:
**28.06.89 Bulletin 89/26**

(84) Designated Contracting States:
**DE FR GB**

(56) References cited:
**DE-B-2 610 006**
**FR-A-2 460 172**
**GB-A-1 477 366**
**US-A-2 554 783**
**US-A-4 220 429**

(73) Proprietor: **KENNAMETAL INC.**
**One Lloyd Avenue P.O. Box 231**
**Latrobe Pennsylvania 15650 (US)**

(72) Inventor: **Mitchell, Robert N.**
**4614 Connell Drive**
**Raleigh North Carolina 27612 (US)**
Inventor: **Hunt, James L.**
**11609 Rutledge Bay**
**Raleigh North Carolina 27614 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Description

The present invention relates to a method of removing material from a workpiece and, especially, to the use of center cutting end mills for forming contours in titanium materials.

Materials such as titanium have relatively light weight and great strength and, for that reason, are used in structural and operating parts for aircraft. Structural parts for aircraft, when made from titanium, must be thin in cross section while having flanges perpendicular to said cross sections. In order to manufacture such parts having thin cross sections from titanium, it is necessary to machine said parts out of solid blocks of stock. This usually requires that more titanium material be removed from the block than will remain in the workpiece.

To date, the method used in removing the titanium has been using a drill to make a cylindrical access hole with a predetermined depth in the pocket to be formed in the titanium. End mills are then lowered to a fraction of the depth of the access hole and traversed over an x and y axis until the entire surface of the pocket to be formed is traversed. The method is again repeated until each fraction of depth of cut totals the required part print depth.

The problem with the above procedure is that it is extremely time consuming, and the cutting edges of the end mills are easily and very often damaged. The cause of the damage usually is due to the cutting edge recutting an already machined chip.

When the cutting edge of the end mill encounters a previously machined chip, it can cause systems deflection and damage itself. When utilizing carbide instead of H.S.S. material in the drill or end mill, the carbide cutting edge can also be damaged when a previously machined chip is caught between the cutting edge and the uncut material.

The present invention provides a method of removing material from a workpiece which comprises the steps of: milling cylindrical holes having a predetermined depth in a surface of the workpiece by rotating a center cutting end mill and reciprocally moving the rotating center cutting end mill along its Z axis from above the surface of the workpiece, positioning said holes so that their circumferences are tangential to the circumference of at least two other holes in the surface of the workpiece, by cutting said holes, forming posts and cups bounded by portions of the circumferences of said holes, removing said posts from the workpiece by reciprocally moving the rotating centre cutting end mill along its Z axis from above said posts, and removing said cusps from the workpiece.

According to a specific use of the present invention, material is removed from a workpiece, especially a titanium alloy workpiece, to form a rectangular or square configuration which includes the steps of forming individual cylindrical holes having a predetermined depth in a workpiece and positioning said holes along the length and width of the rectangle or square contour so that their circumferences are tangential to the circumference of at least two other holes in the surface of the workpiece. Once these holes are placed within the boundaries of the rectangle or square, posts or cusps will be formed which are bounded by portions of the circumferences of said holes. The completed rectangle or square contour may then be finished by removing the posts and cusps from the workpiece by an end milling technique.

In carrying out the method of the present invention, a special tool is used which is referred to as a center cutting end mill. It should be mentioned that center cutting end mills are known per se, e.g. from US—A—4 220 429. These tools have an axially extending center passage for supplying a coolant so as to supply coolant through the shank of the tool and flush the chips as they are generated from the workpiece.

The exact nature of the present invention will become more clearly apparent upon reference to the following detailed specification taken in connection with the accompanying drawings in which:

Figure 1 is a sectional view of a typical structural part.

Figure 2 is a side sectional view from a block of material necessary to create the part in Figure 1.

Figure 3 is the center cutting end mill used with the method of the present invention.

Figure 4 is a plan view of the block shown in Figure 2 and being prepared by the method of the present invention.

Figure 5 shows typical continuous and discontinuous type chips.

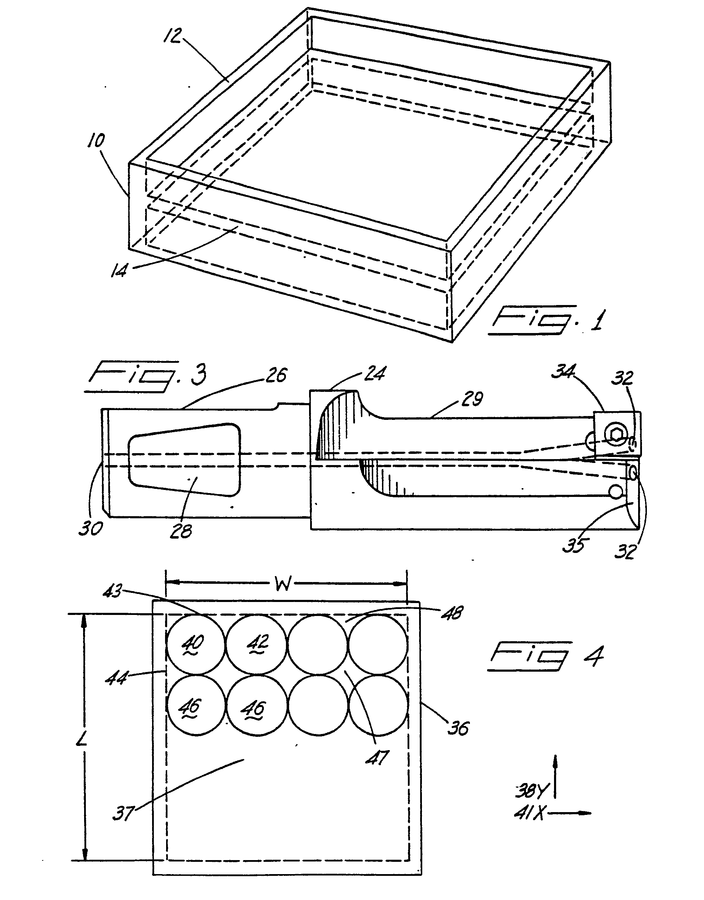

Referring to the drawings somewhat more in detail, what is shown in Figure 1 is a typical titanium structural part found as part of an aircraft structural system.

The structural part 10 resembles a four-sided box with walls 12 and a thin cross sectional area 14. The thin cross sectional area 14, in some cases, may only be as much as 1.27 to 2.54 mm (.050 to .100 inches) thick, with the thickness of walls 12 being approximately the same.

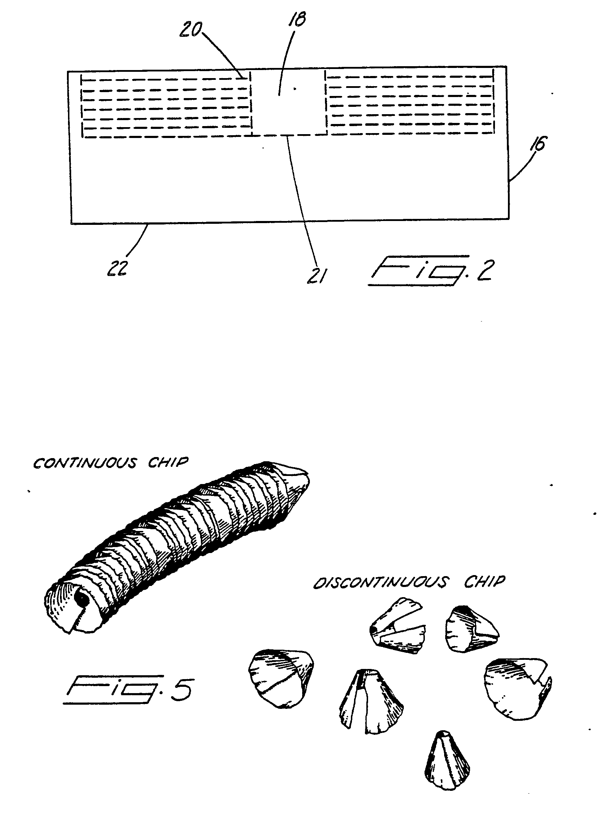

When the part 10 is made of titanium in order to achieve the configuration shown in Figure 1, special procedures must be used. Specifically, shown in Figure 2 is a piece of stock 16 from which the structural part 10 may be fabricated. Presently, part 10 is constructed by, first, sinking a hole 18 to the depth required to create an end mill access hole. Next, an end mill is lowered to depth 20 in the access hole 18, and the end mill is then traversed over its x and y coordinates until it covers the surface area necessary to create top half of part shown in Figure 1. The end mill will then be lowered another fractional part of the depth of hole 18, and the entire surface area will be again traversed.

This procedure will be repeated continuously until the bottom 21 of the hole 18 is reached. The part will then be turned over and the same procedure applied to the lower side 22 so as to create part shown in Figure 1.

As a part of the present invention, a special tool has been created, pictured in Figure 3. The tool 24 has a shank 26 with a whistle notch type configuration, as shown at 28, for attachment to a rotary power source. The tool is similar to preexisting center cut end mills, except that its forward section 29 has been elongated so as to be able to create the depth of hole necessary for the particular part to be machined.

The tool also has a center hole 30 which supplies the coolant through the shank 26 and out end faces 32 so as to cool and flush the chips as they are generated from the workpiece. The inserts 34 are mounted on the tool. The inserts used particularly have a sharp edge rather than any honed or preground edge. A relief 35 is provided behind the second mounted insert 34, not shown.

Since safety is of utmost concern to the metalcutting industry, this method produces cool, safe chips which are generated at conservative cutting feeds and speeds. The inherent fire hazard of titanium is significantly reduced because the chip is formed at low surface speed per minute (S.P.M.) and in a coolant induced environment.

While this invention has been used for the processing of titanium, it is thought that, if one were to advance to the machining of other materials, the cutting edge may be honed rather than sharp.

What is shown in Figure 4 is a plan view of a piece of stock 36 from which will be made the typical part as shown in Figure 1. It has now been proven that the center cutting end mill 24 is most preferably designed to have a diameter which is a multiple of the width and length of the cavity 37. When the end mill 24 is so designed, material from the part may be removed most efficiently by maneuvering the tool reciprocally in the Z axis direction. The Z axis direction, according to Figure 4, would be facing into the paper.

The x and y axes are shown as indicated at 38 and 41. It is most desirable that the end mill 24 be positioned at the necessary x and y coordinates so as to start by drilling hole 40. Hole 40 necessarily has portions of its diameter tangent to the sides 43 and 44 of part 36.

Producing hole 40 may require the center cut end mill to instantaneously pause its feed at certain intervals during its engagement with the workpiece so as to break the chip being formed. This will be required when the chip type is continuous in formation, and it may not be required if the chip type is discontinuous during formation (see Figure 5).

Once hole 40 is created by reciprocally moving the end mill 24 in the Z axis direction, it may then, when in the up position, be moved in the direction so that reciprocal motion in the Z axis will create hole 42. The end mill 24 may then again be raised, and by repositioning the tool in the x and y coordinate directions, multiple holes may be created that fit within the boundaries of the width and length of part 36.

When created, the holes 40, 42 and typical holes 46, will have portions of their diameters that are cotangent with portions of the diameters of adjacent holes.

When the entire plan view of part 36 has been machined with the necessary holes 40, 42 and 46, what will be left are the posts 47 which will be in the form of a star when viewed in a plan view and the cusps 48 formed along the peripheral boundary of the part 36.

Preferably, the next step according to the present invention is to position the end mill 24 along the x and y coordinates so that it rests along the Z axis immediately above the remaining posts 47. Reciprocal movement along the Z axis again does away with posts 47, and this step must be repeated for every post that remains as a star in the plan view of Figure 4.

Cusps 48 are then removed by the normal techniques of lowering an end mill along the Z axis until it reaches the correct depth and then transversing the x and y coordinates so as to form the necessary boundaries and/or using the Z axis machining method to remove the cusps.

One of the reasons it is believed that tool life is enhanced immensely over the procedures of the prior art concerns the cotangency points shown in Figure 4 of multiple holes 40, 42 and 46. When a tool is rotating in a hole, there is always the possibility that an already hardened and precut chip can get caught between the wall and the cutting edge of the tool. When this occurs, the cutting edge of the tool, whether it be high speed steel or carbide, is chipped, thereby diminishing the effective life of the tool. In the present case, when such an occurrence happens, the chip merely deflects the thin walls of the holes at the cotangency points, thereby lessening the damage to the cutting edge of the tool.

Two additional reasons it is believed that tool life is enhanced immensely over the procedures of the prior art concern the minimizing of systems deflection and elimination of the tangential impacts of end milling. The machine tool life should also be extended because the Z axis force does not impose the spindle bending forces of peripheral end milling, but imparts Z axis force in the direction of strength of the machine tool system.

Modifications may be made within the scope of the appended claims.

### Claims

1. A method of removing material from a workpiece (10) which comprises the steps of:

(a) milling cylindrical holes (40, 42, 46, . . .) having a predetermined depth in a surface of the workpiece (10) by rotating a center cutting end mill (24) and reciprocally moving the rotating center cutting end mill (24) along its Z axis from above the surface of the workpiece (10);

(b) positioning said holes (40, 42, 46, . . .) so that their circumferences are tangential to the circumference of at least two other holes in the surface of the workpiece (10);

(c) by cutting said holes (40, 42, 46, . . .), forming posts (47) and cusps (48) bounded by portions of the circumferences of said holes;

(d) removing said posts (47) from the workpiece (10) by reciprocally moving the rotating center cutting end mill (24) along its Z axis from above said posts; and

(e) removing said cusps (48) from the workpiece (10).

2. The method according to Claim 1 in which said positioning of said holes (40, 42, 46, . . .) one from the next is carried out after forming of each hole by repositioning the center cutting end mill (24) along its X or Y axis a distance substantially equal to its diameter.

3. The method according to Claim 1 which further comprises the step of instantaneously pausing the reciprocatory movement of the rotating center cutting end mill (24) at certain intervals during its engagement with the workpiece (10) so as to break a chip of the material being removed.

4. The method according to Claim 1 which further comprises the steps of selecting titanium as the workpiece (10) and providing coolant flow through the ends of the rotating center cutting end mill (24) while cutting said holes (40, 42, 46, . . .) with the same.

**Patentansprüche**

1. Verfahren zur Entfernung von Material an einem Werkstück (10), mit folgenden Schritten:

(a) Fräsen von zylindrischen Löchern (40, 42, 46, . . .) von vorbestimmter Tiefe in einer Oberfläche des Werkstücks (10) durch Rotation eines in der Mitte schneidenden Stirnfräsers (24) und Hin- und Herbewegen des rotierenden, in der Mitte schneidenden Stirnfräsers (24) entlang seiner Z-Achse von oberhalb der Oberfläche des Werkstücks (10) her;

(b) Anordnung der Löcher (40, 42, 46, . . .) in solcher Weise, daß ihre Umfangslinien tangential zur Umfangslinie von wenigstens zwei weiteren Löchern in der Oberfläche des Werkstücks (10) gelegen sind;

(c) Bildung von Inseln (47) und Zinken (48), die durch Teile der Umfangslinien der Löcher berandet sind, durch Fräsen dieser Löcher (40, 42, 46, . . .);

(d) Entfernen der Inseln (47) von dem Werkstück (10) durch Hin- und Herbewegung des rotierenden, in der Mitte schneidenden Stirnfräsers (24) entlang seiner Z-Achse von Oberhalb der Inseln; und

(e) Entfernen der Zinken (48) von dem Werkstück (10).

2. Verfahren nach Anspruch 1, bei welchem die Positionierung der Löcher (40, 42, 46, . . .) jeweils bezüglich des darauffolgenden ausgeführt wird, nachdem jedes Loch hergestellt wurde, indem der in der Mitte schneidende Stirnfräser (24) entlang seiner X- oder Y-Achse um eine Strecke verschoben wird, die etwa gleich seinem Durchmesser ist.

3. Verfahren nach Anspruch 1, welches ferner den Verfahrensschritt enthält, daß die Hin- und Herbewegung des rotierenden, in der Mitte schneidenden Stirnfräsers (24) in bestimmten Zeitabständen während seines Angriffs am Werkstück (10) kurzzeitig angehalten wird, um einen Span des zu entfernenden Materials abzubrechen.

4. Verfahren nach Anspruch 1, welches ferner den Verfahrensschritt enthält, daß für das Werkstück (10) Titan gewählt wird und eine Kühlmittelströmung durch die Enden des rotierenden, in der Mitte schneidenden Stirnfräsers (24) geleitet wird, während die Löcher (40, 42, 46, . . .) mittels desselben gefräst werden.

**Revendications**

1. Procédé d'enlèvement de matière d'une pièce à usiner (10) comprenant les étapes suivantes, selon lesquelles:

(a) On fraise des trous cylindriques (40, 42, 46, . . .) ayant une profondeur prédéterminée dans une surface de la pièce à usiner (10) en faisant tourner une fraise en bout, ou à queue et coupe centrale (24) et on déplace alternativement la fraise (24) en rotation le long de son axe Z en partant du dessus de la surfacde de la pièce (10);

(b) On positionne lesdits trous (40, 42, 46, . . .) de façon que leur circonférence soit tangente à au moins deux autres trous dans la surface de la pièce (10);

(c) En usinant lesdites trous (40, 42, 46, . . .), on forme des potelets (47) et des redans (48) limités par des parties de la circonférence desdits trous;

(d) On élimine lesdits potelets (47) de la pièce (10) en déplaçant alternativement la fraise (24) en rotation le long de son axe Z en partant du dessus desdits potelets; et

(e) On enlève lesdits redans (48) de la pièce à usiner (10).

2. Procédé selon la revendication 1 dans lequel ledit positionnement dudit trou (40, 42, 46, . . .) par rapport au trou suivant est exécuté après avoir percé chaque trou, en repositionnant la fraise (24) le long de ses axes X et Y, d'une distance sensiblement égale à son diamètre.

3. Procédé selon la revendication 1 selon lequel en outre, on interrompt passagèrement le mouvement alternatif de la fraise (24) en rotation, à certains intervalles durant son engagement avec la pièce (10) de façon à casser un copeau de matière en cours d'enlèvement.

4. Procédé selon la revendication 1 selon lequel, en outre, on sélectionne le titane comme pièce à usiner (10) et on assure un courant d'agent de refroidissement à travers les extrémités de la fraise (24) en rotation, pendant le forage desdits trous (40, 42, 46, . . .) avec celle-ci.

Fig. 1

Fig. 3

Fig. 4

CONTINUOUS CHIP

DISCONTINUOUS CHIP

Fig.2

Fig.5